# EUROPEAN PATENT SPECIFICATION

(11) **EP 0 235 577 B1**
(45) Date of publication and mention of the grant of the patent: **20.07.1994**
(21) Application number: 87101259.7
(22) Date of filing: 30.01.1987
(51) Int. Cl.: C08K 9/08, C08K 7/02, C04B 16/06, C08J 5/06

(54) **Acrylic fibres having improved dispersability in viscous organic or inorganic matrices**
Akrylfasern mit Fähigkeit zur Zerstreuung in viskosen organischen oder anorganischen Grundmassen
Fibres acryliques ayant une dispersibilité accrue dans des matrices visqueuses organiques ou inorganiques

(30) Priority: 31.01.1986 IT 1926386
(43) Date of publication of application: 09.09.1987
(73) Proprietor: Montefibre S.p.A., Milan (IT)
(72) Inventor: Tedesco, Raffaele, I-30171 Mestre-Venezia (IT); Bocus, Socrate, I-30175 Marghera-Venezia (IT); Signoretti, Luigi, I-30175 Mestre-Venezia (IT)
(74) Representative: Barz, Peter, Dr.

(56) References cited:
- US-A- 4 263 184
- CHEMICAL ABSTRACTS, vol. 104, no. 26, June 1986, page 296, no. 229532p, Columbus, Ohio, US; & JP-A-60 215 559
- CHEMICAL ABSTRACTS, vol. 103, no. 14, October 1985, page 277, no. 109169h, Columbus, Ohio, US; & JP-A-60 60 959
- CHEMICAL ABSTRACTS, vol. 85, no. 2, 12th July 1976, page 277, no. 9714y, Columbus, Ohio, US; & JP-A-76 20 222

## Description

The present invention relates to acrylic fibres endowed with improved dispersability in viscous organic or inorganic matrices.

More particularly, the present invention relates to acrylic fibres showing better dispersability in mortars, concretes, plasters, thermosetting resins, and so forth.

The use is known of high-tenacity and high-elastic modulus acrylic fibres as a reinforcement for such inorganic matrices as cement, plaster, mortar, concrete, and such organic matrices, as thermoplastic, thermosetting polymeri matrices, etc.

However, when these fibres are used in a length higher than 2 mm, considerable problems occur in respect of homogeneousness and of dispersability in the matrix to be reinforced, such that the addition has to be limited to very low values, generally lower than 3% by weight. Reinforced matrices containing such amounts of acrylic fibres have however unsatisfactory mechanical properties, especially in case of organic matrices.

Such a drawback is due to the fact that the acrylic fibres, differently from those of glass, have a high value of elongation at break, generally of the order of 8%-15%; thus, during the admixing, they bend easily, without breaking, originating very bulky "tangles", which prevent a good penetration and dispersion in the material forming the matrix. Discontinuous areas are thus formed, which render fragile or easily deformable the material.

In case of high-elongation fibres, this drawback could be overcome by using fibres having high flexural strength, so to prevent them to so position themselves to form "tangles". A way to obtain a high flexural strength is that of using high-diameter fibres, so to obtain a low length-to-diameter ratio. But the high-diameter fibres have low rigidity at break and, with the weight being the same, a lower surface for hooking to the matrix. Thus, the reinforced materials obtained with these fibres do not have the required mechanical properties.

It has been found now by the Applicant that the fibre agglomerates as defined in claim 1 can be advantageously used as a reinforcement for viscous inorganic matrices, without the above reported drawbacks occurring and, in particular, without the "tangling" phenomenon occurring.

In particular, the best results of dispersability, of homogeneity and of flexural resistance are obtained by using agglomerates containing a number of acrylic fibres equal to or larger than: 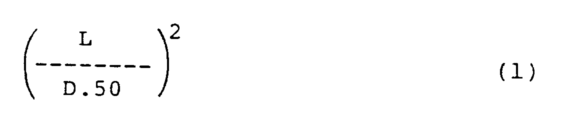
wherein L is the length of the fibres in millimetres and D is the diameter of the fibres in millimetres.

By applying the relationship (1) to acrylic fibres having diameters comprised within the range of from 10 to 50 microns and length comprised within the range of from 1 to 60 mm, the following indicative values are obtained for the preferred number of fibres in each agglomerate:

| Length, mm | Number of fibres having diameter (microns) | | | |
|---|---|---|---|---|
| | 10 | 20 | 40 | 50 |
| 2 | 15 | 5 | 1 | 1 |
| 3 | 35 | 10 | 2 | 1 |
| 6 | 150 | 35 | 10 | 6 |
| 12 | 600 | 150 | 35 | 25 |
| 24 | 1.500 | 600 | 150 | 100 |
| 48 | 10.000 | 2.500 | 600 | 400 |
| 60 | 15.000 | 4.000 | 1.000 | 600 |

It results evident from the above reported table that the use of agglomerates of a larger number of fibres is particularly required when the fibres are very thin, as of the order of from 10 to 20 microns; and vice-versa, when the fibres have a diameter of 50 microns and more, they can be also used individually. In the practice of the invention, we prefer that each agglomerate contains a number of fibres larger than 10.

The fibres having small diameter, generally lower than 50 microns, are particularly preferred as a reinforcement, in that they are endowed with higher specific values of ultimate tensile strength and of elastic modulus, and moreover they have a greater surface area, per unit weight, which interacts with the material to be reinforced. Even if the longer fibres are recommended to the purpose of conferring a higher strength to the composite manufactured items, in practice, in case of admixing of fibres to viscous matrices, it is preferred that such a length be shorter than 60 mm, to obtain more homogeneous matrices.

By the term "acrylic fibres", as it is used in the instant invention and in the appended claims, those fibres are understood, which are obtained by wet-spinning or dry-spinning of homopolymers of acrylonitrile, of copolymers containing at least 50% by weight of acrylonitrile, the residue being an ethylenically unsaturated comonomer copolymerisable with acrylonitrile, or of blends of polymers wherein the total content of polymerised acrylonitrile is higher than 70% by weight.

The subject agglomerates of the present invention are used in blends with mortars, concretes, cements, plasters, paints, sealants, putties, plastic materials, rubbers, etc, to the purpose of conferring to them both aesthetical, thixotropic, anti-shrinkage properties, etc., and properties of strength to mechanical stresses. For this latter property, we prefer that the fibres have a tenacity higher than 50 cN/tex, an initial modulus higher than 1000 cN/tex, and an elongation at break not higher than 15%. These fibres are well-known, and are marketed by the same Applicant.

For the preparation of the subject agglomerates of the present invention, any known cohesion agent can be used. The cohesion-conferring agent is used as a function of the application the agglomerate is intended for, so to be soluble, to swell or to melt in the matrix to be reinforced, disengaging the fibres from each other after the step of admixing to the matrix.

In case the agglomerates are used to reinforce such inorganic matrices as mortars, concretes, plasters, and so forth, the cohesion-conferring agent is selected from the agents soluble or swelling in water or in the alkaline solution of the said matrices. In case, to the contrary, the agglomerates are used to reinforce such thermosetting matrices as polyester, epoxy or polyurethane resins, etc., the cohesion-conferring agent is preferably of the type soluble in such organic solvents as ethylene glycol, styrene, toluene, etc.

Examples of agents soluble or swelling in water, which may be used to the purpose of preparing the agglomerates of the present invention are: carboxy-methyl-cellulose; polyvinyl alcohol; polyacrylic or polymethacrylic acids; polyvinyl acetate with medium or high hydrolysis degree; acrylic and/or methacrylic copolymers soluble or emulsifiable in water; copolymers containing an alkyl-acrylate, an alkyl-methacrylate and an unsaturated carboxylic acid, urea-formaldehyde resins, etc.

Examples of cohesion-conferring agents soluble in organic solvents can be: polyurethane resins, polyester resins, epoxy resins, and so forth.

The amount of cohesion-conferring agent to be applied depends on the diameter of the fibres, on their length, on the number of fibres which have to be bonded, on the type of cohesion-conferring agent used, as well as on the fibre chopping process also. Generally, such an amount is comprised within the range of from 1 to 30%, and is preferably comprised within the range of from 2 to 10% by weight relatively to the fibre.

The cohesion-conferring agent can be applied to the fibres as a continuous process, i.e., during the process of production of the same fibres, or batchwise, i.e., to the already formed fibres.

According to the continuous process, the fibres exiting the coagulation bath, in case of wet-spinning, or from the spinning column, in case of dry-spinning, after a one- or more-step drafting, and drying and collapsing treatment, are dipped into an aqueous solution of dispersion of the cohesion-conferring agent. The fibre bundle is then wrung and the residual water is removed by heat treatment. The bonded and dried fibres, so obtained, are chopped, either in line or in a subsequent step, by any known chopping machine, to the desired length.

In the batchwise process, the fibres, in the form of a continuous tow, either arranged on cars or as bobbins, are plunged in the aqueous solution or dispersion containing the cohesion-conferring agent, and are then dried and chopped.

According to a preferred embodiment of the present invention, agglomerates of acrylic fibres can be obtained by the following sequence of steps: extrusion of the polymer through a die, coagulation of the filaments exiting the die, washing and wet-drafting, drying, collapsing at 150-200^{o}C, new drafting of the filaments in the plastic state, up to a total draft ratio of at least 8, cooling down of the filaments under hindered-retraction conditions, passage of the filaments through an aqueous solution or dispersion of a cohesion-conferring agent, wringing of the filaments through rollers, to to have a fibre/solution ratio of about 2, drying at 120-150^{o}C, and finally cooling down of the agglomerated filaments on rollers at 50-60^{o}C. The agglomerated filaments can be sent, in continuous, to a guillotine chopping machine or to a wheel chopping machine, or they are collected on cars and submitted to chopping in a separate step.

The bonding degree of the various filaments to each other must be such, as to withstand the chopping and carriage step, as well as the sacking or packaging step.

To the purpose of better understanding the present invention, and to practically embodying the same, hereunder some illustrative, non-limitative Examples are reported.

### Example

An acrylonitrile homopolymer, having a specific viscosity of 0.340 (as measured at 25^{o}C with a solution containing 0.1 g of polymer in 100 ml of dimethylformamide) and a granulometric distribution of 85% under 100 microns, and with the residual 15% being comprised within the range of from 100 to 150 microns, has been so milled as to obtain a granulometric distribution totally under 100 microns. The ground polymer has been dispersed in dimethyl-acetamide, at the temperature of 30^{o}C, so to form a 14%-solids homogeneous dispersion, and has been dissolved at 150^{o}C, by being passed through a heat exchanger.

The homogeneous solution so obtained has been cooled to the temperature of about 100^{o}C, has been filtered and sent to a 500-bore die, each bore having a diameter of 52 microns, with a flow-rate of 33.3 ml/minute. The filaments have been coagulated in a solution constituted by 50% by weight of dimethylacetamide and by 50% of water, kept at the temperature of 30^{o}C, and collected by a pair of rollers at the speed of 2.3 m/minute, with a draft ratio ${\text{V}}_{\text{l}} {\text{/V}}_{\text{o}} \text{= 0.083}$ , wherein Vₗ is the rollers peripheral speed, and Vₒ is the theoretical extrusion speed.

The filaments so obtained have been washed with water, and have been contemporaneously drafted in four successive drafting steps, up to confer a total draft ratio of 7.5, with the following modalities and under the following operating conditions:

| | Temperature | Draft Ratio | Solvent Content |
|---|---|---|---|
| 1^{st} Step | 60^{o}C | 1.2 | 20% |
| 2^{nd} Step | 70^{o}C | 1.2 | 10% |
| 3^{rd} Step | 85^{o}C | 1.3 | 3% |
| 4^{th} Step | 98^{o}C | 4.01 | 0.1% |

The drafted filaments, after the finishing, have been dried on rollers heated at 190^{o}C and dry-drafted in three steps, with a total draft ratio of 2.1, under the following conditions:

| Step | Draft Ratio | Temperature |
|---|---|---|
| 1^{st} Step | 1.6 | 190^{o}C |
| 2^{nd} Step | 1.2 | 170^{o}C |
| 3^{rd} Step | 1.1 | 160^{o}C |

The filaments, cooled down to room temperature, and collected on bobbin, had the following characteristics:

| | |
|---|---|
| Count: | 2.5 dtex |
| Tenacity: | 70 cN/ tex |
| Elongation: | 8.7 % |
| Modulus: | 2000 cN/ tex |

The filaments have been passed through an aqueous solution containing, as the cohesion-conferring agent, a derivative of polyvinyl alcohol marketed by Hoechst under the tradename AFILAN PS. The filaments exiting the aqueous solution have been then wrung between two rollers; the concentration of the solution, and the amount of liquid conveyed by the fibre have been such, as to have variable amounts of cohesion-conferring agent as a function of th chopping length, as reported in the Table:

| Chopping Length, mm | Amount of Applied AFILAN PS, % by weight |
|---|---|
| 6 | 1.5 |
| 20 | 4 |
| 30 | 5 |
| 48 | 7 |

The filaments have been dried at 130^{o}-140^{o}C.

To a mixer:
- 1.5 litres of water
- 2.5 kg of Portland 525 cement; and
- 2.5 kg of sand of finishing type, with granulometry of 500 microns
have been charged.

The mixture has been kneaded for about 1 minute at high speed, so to render it homogeneous and clot-free. At the end of this operation, 100 g of high-modulus polyacrylonitrile fibres, obtained as above said, have been slowly added, over a 30-45 minutes time, and with low-rate stirring. After the addition of the fibres, the stirring has been continued for a further 30-60 seconds, always at low speed. At the end, the blend has been poured into moulds of dimensions of 20 cm x 30 cm, and of 1.5 cm in height. The so-obtained slabs have been aged for 7 days in a room with 90% of relative humidity and at 20^{o}C, and for a further 21 days under room conditions. The slabs have been cut into strips of 20 cm x 2.5 cm of surface area, which have been used for the measurement of the flexural strength at breakage on an INSTRON stress-strain meter. The equipment was provided with a fitting for flexural breakage, equipped with two support rollers of 3/8 of an inch (= 9.5 mm) in diameter, positioned with their axes spaced apart by 152.4 mm. The third roller, of reaction to the load, had the same diameter of 3/8 of an inch, and was positioned in a central position relatively to the first two rollers. The deformation speed used has been of 0.5 mm/min.

With such modalities as described, two samples of strips (A and B) have been prepared. For the first sample (A), the polyacrylonitrile fibres as above reported, not treated with the aqueous solution of the cohesion-conferring agent, and having separated individual filaments, and a length of 12 mm, have been used.

For the second sample (B), the same polyacrylonitrile fibres have been used, after being treated with the aqueous solution of the adhesion-conferring agent AFILAN PS. These fibres have the form of agglomerates, each constituted by about 300 fibres having a length of 12 mm. The content of cohesion-conferring agent is of about 3% by weight.

The values of flexural strength at breakage have been:
SAMPLE A = 50 kg/cm²
SAMPLE B = 80 kg/cm².

By observing the fracture sections of the samples, it has been observed that in sample A the fibres were distributed in an inhomogeneous and isles-forming pattern, with the presence of bundles of fibres not "wetted" by the matrix. In sample B, to the contrary, the fibres were distributed in a uniform pattern throughout the matrix, and were completely "wetted" by the same matrix.

## Claims

1. Agglomerates of fibres having improved dispersibility in viscous inorganic matrices and comprising acrylic staple fibres based on homopolymers or copolymers of acrylonitrile containing at least 50% by weight of acrylonitrile having a tenacity higher than 50 cN/tex, an initial modulus higher than 1000 cN/tex, and an elongation at break not higher than 15%, each fibre having a diameter of less than 50 micrometers and a length of more than 3 mm, bonded to each other by a cohesion-conferring agent employed in an amount of from 1 to 30% by weight relative to the fibres, characterized in that said cohesion-conferring agent is soluble or swellable in water or in alkaline aqueous solutions or blends of said inorganic matrices, thereby disengaging the fibres from each other after admixing with said matrices.

2. Agglomerates of fibres according to claim 1, wherein the number of acrylic fibres per agglomerate is equal to or larger than: 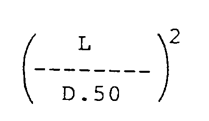 wherein L is the length of the fibres in millimeters and D is the diameter of the fibres in millimeters.

3. Agglomerates of fibres according to claim 2, wherein the number of acrylic fibres per agglomerate is larger than 10.

4. Agglomerates of fibres according to any of the preceding claims, wherein each acrylic fibre has a length of less than 60 mm.

5. Agglomerates of fibres according to any of the preceding claims, wherein the cohesion-conferring agent is present in an amount of from 2 to 10% by weight relative to the fibres.

## Patentansprüche

1. Agglomerate von Fasern mit verbesserter Dispergierbarkeit in viskosen anorganischen Matrices, umfassend Acryl-Stapelfasern basierend auf Homopolymeren oder Copolymeren von Acrylnitril, die mindestens 50 Gewichtsprozent Acrylnitril enthalten, die eine Zähigkeit von mehr als 50 cN/tex, ein Anfangs-Elastizitätsmodul von mehr als 1000 cN/tex and eine Bruchdehnung von nicht mehr als 15% haben, wobei jede Faser einen Durchmesser von weniger als 50 »m und eine Länge von mehr als 3 mm hat, welche durch ein in einer Menge von 1 bis 30 Gewichtsprozent, bezogen auf die Fasern, verwendetes Kohäsionsmittel miteinander verbunden sind, dadurch gekennzeichnet, daß das Kohäsionsmittel in Wasser oder alkalischen wäßrigen Lösungen oder Mischungen der anorganischen Matrices löslich oder quellbar ist, wodurch die Fasern nach dem Vermischen mit den Matrices voneinander gelöst werden.

2. Agglomerate von Fasern nach Anspruch 1, worin die Anzahl der Acrylfasern pro Agglomerat gleich oder größer ist als: 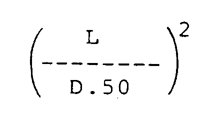 worin L die Länge der Fasern in mm und D der Durchmesser der Fasern in mm ist.

3. Agglomerate von Fasern nach Anspruch 1, worin die Anzahl der Fasern pro Agglomerat größer als 10 ist.

4. Agglomerate von Fasern nach irgendeinem der vorangehenden Ansprüche, worin jede Acrylfaser eine Länge von weniger als 60 mm hat.

5. Agglomerate von Fasern nach irgendeinem der vorangehenden Ansprüche, worin das Kohäsionsmittel in einer Menge von 2 bis 10 Gewichtsprozent, bezogen auf die Fasern, vorhanden ist.

## Revendications

1. Agglomérats de fibres offrant une dispersibilité améliorée dans des matrices inorganiques visqueuses et comprenant des fibres acryliques coupées à base d'homopolymères ou de copolymères d'acrylonitrile contenant au moins 50% en poids d'acrylonitrile offrant une ténacité supérieure à 50 cN/tex, un module initial supérieur à 1000 cN/tex, et un allongement à la rupture qui ne soit pas supérieur à 15%, chaque fibre ayant un diamètre inférieur à 50 micromètres et une longueur de plus de 3 mm, liées les unes aux autres par un agent conférant de la cohésion employé en une quantité de 1 à 30% en poids par rapport au poids des fibres, caractérisé en ce que cet agent conférant de la cohésion est soluble ou gonflable dans l'eau ou dans des solutions aqueuses et alcalines ou des mélanges desdites matrices inorganiques, ce qui désengage les fibres les unes des autres après qu'elles aient été mélangées avec ladite matrice.

2. Agglomérats de fibres selon la revendication 1, dans lesquels le nombre de fibres acryliques par agglomérat est égal ou supérieur à: 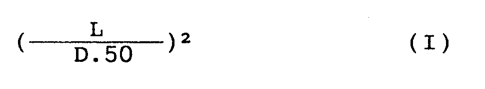 formule dans laquelle:
L représente la longueur des fibres en millimètres; et
D représente le diamètre des fibres en millimètres.

3. Agglomérats de fibres selon la revendication 2, dans lesquels le nombre de fibres acryliques par agglomérat est supérieur à 10.

4. Agglomérats de fibres selon une quelconque des revendications précédentes, dans lesquelles chaque fibre acrylique a une longueur inférieure à 60 mm.

5. Agglomérats de fibres selon une quelconque des revendications précédentes, dans lesquelles l'agent conférant de la cohésion est présent en une quantité de 2 à 10% en poids par rapport au poids des fibres.
